# FASCICULE DE BREVET EUROPEEN

(11) **EP 2 102 530 B1**
(45) Date de publication et mention de la délivrance du brevet: **31.03.2010**
(21) Numéro de dépôt: 07858604.7
(22) Date de dépôt: 17.10.2007
(51) Int. Cl.: F16H 61/662

(54) **PROCEDE DE COMMANDE D'UNE TRANSMISSION AUTOMATIQUE CONTINUMENT VARIABLE POUR VEHICULE AUTOMOBILE**
VERFAHREN ZUR STEUERUNG EINES STUFENLOSEN AUTOMATIKGETRIEBES FÜR EIN KRAFTFAHRZEUG
METHOD FOR CONTROLLING A CONTINUOUSLY VARIABLE AUTOMATIC TRANSMISSION FOR A MOTOR VEHICLE

(30) Priorité: 18.12.2006 FR 0611013
(43) Date de publication de la demande: 23.09.2009
(73) Titulaire: RENAULT S.A.S., 92100 Boulogne Billancourt (FR)
(72) Inventeur: MAYNARD, Julien, 75013 Paris (FR)
(86) Numéro de dépôt international: PCT/FR2007/052179
(87) Numéro de publication internationale: WO 2008/074948

(56) Documents cités:
- EP-A2- 1 318 334
- WO-A-01/46606
- AU-B2- 759 923
- DE-A1- 4 329 978
- DE-A1- 19 546 651
- DE-A1- 19 856 732
- DE-A1- 19 921 500
- GB-A- 2 345 522
- US-A- 4 943 921
- US-A1- 2002 165 064

## Description

L'invention concerne un procédé de commande d'une transmission automatique continûment variable pour véhicule automobile, en particulier lors des rétrogradations forcées, dites « kick down » en vocable anglo-saxon, pour obtenir rapidement une forte accélération du véhicule.

GB-A-2345522 et aussi DE-A-19546651 montrent le préambule de la revendication indépendante 1.

Une telle rétrogradation est déclenchée par une action volontaire du conducteur sur la pédale d'accélérateur qu'il enfonce à fond pour obtenir une forte accélération de son véhicule, interprétée par le système de contrôle du groupe moto-propulseur du véhicule comme une demande de puissance maximale. Cela peut être nécessaire par exemple en cas de dépassement ou de situation d'urgence. Le procédé de commande de la transmission automatique continûment variable va positionner le régime du moteur sur sa valeur correspondant à sa puissance maximale.

Le problème technique posé par ces procédures « kick down » est que le régime du moteur permettant d'obtenir sa puissance maximale évolue suivant différentes conditions, dont les conditions environnementales de conduite, l'état de fonctionnement du moteur ou autres. Ainsi, les conditions atmosphériques, comme l'altitude, modifient les performances du moteur, en particulier la densité de l'air, qui diminue avec l'altitude, a pour effet de limiter lesdites performances et d'abaisser le régime de puissance maximale dans certains cas.

Concernant le fonctionnement du moteur, l'utilisation d'un filtre à particules, en augmentant la contre-pression à l'échappement, modifie les performances maximales du moteur, et est susceptible également d'abaisser ce régime de puissance maximale quand il est encrassé. De même, le fonctionnement du moteur en modes dégradés, avec limitations volontaires des performances, a aussi pour effet d'abaisser le régime de puissance maximale du moteur.

Une transmission automatique continûment variable, remplaçant la traditionnelle boîte de vitesses mécanique, est généralement composée de deux poulies à diamètre variable, reliées par une courroie. La première poulie, dite primaire ou motrice, est entraînée par le moteur et la seconde poulie, dite secondaire, est reliée aux roues motrices du véhicule. Pour adapter la démultiplication aux besoins déterminés notamment par la position de la pédale d'accélérateur, on fait varier le diamètre de la poulie primaire et de la poulie secondaire.

L'intérêt d'une telle transmission automatique réside dans sa commande qui peut placer précisément le régime du moteur au point de puissance maximale, en cas de demande d'accélération maximale par « kick down » de la part du conducteur, mais l'inconvénient d'une telle transmission actuellement réalisée est qu'elle ne tient pas compte d'une déchéance de la puissance du moteur selon certains cas évoqués auparavant. Auquel cas, le conducteur peut obtenir une puissance, donc une accélération de son véhicule, inférieure à celle dont il disposait avant sa demande de « kick down ».

Actuellement, dans le cas d'une transmission automatisée discrète, l'altitude à laquelle roule le véhicule est prise en compte par estimation, puis les lois de commande sont translatées pour intégrer la déchéance de puissance du moteur, comme cela est décrit dans le brevet américain US 4 943 921. Cette invention, qui n'est applicable qu'aux boîtes de vitesses automatiques discrètes, ne considère que l'altitude pour apprécier la déchéance de la puissance, n'évoquant nullement l'encrassement du filtre à particules ou l'utilisation de modes dégradés. De plus, cette invention ne fait que translater les lois de passage des rapports de vitesses en fonction de la pression atmosphérique et ne raisonne pas en consigne de régime moteur.

Le but de l'invention est la prise en compte de la déchéance de puissance du moteur, lors des demandes de forte accélération par procédure de « kick down » pour obtenir la puissance maximale fournie réellement par le moteur. A cet effet, le procédé de commande de la transmission automatique continûment variable tient compte de l'état de fonctionnement du moteur et des conditions environnementales du véhicule.

Pour cela, l'objet de l'invention est un procédé de commande d'une transmission automatique continûment variable pour véhicule automobile, équipé d'un dispositif de rétrogradation forcé dit « kick down », mis en oeuvre par enfoncement total de la pédale d'accélérateur par le conducteur pour obtenir l'accélération maximale du véhicule, et d'un système de contrôle électronique du moteur, **caractérisé en ce qu**'il détermine le régime du moteur auquel la puissance maximale du moteur peut être atteinte, en fonction de l'état de fonctionnement du moteur et des composants qui lui sont liés, un filtre à particules notamment, et des conditions environnementales extérieures du véhicule, l'altitude notamment, lors des procédures de rétrogradation forcée.

Selon une autre caractéristique du procédé, il comporte les étapes suivantes :
- la détection d'une demande d'accélération maximale par procédure de « kick down » déclenchée par une action volontaire du conducteur,
- la détermination du régime du moteur auquel la puissance maximale du moteur peut être atteinte en fonction de l'état de fonctionnement du moteur et de l'environnement du véhicule,
- le calcul de la consigne du régime primaire de la transmission automatique, à appliquer à ladite transmission automatique pour obtenir la puissance maximale du moteur, dans le cas d'une détection de demande d'accélération maximale.

Selon une autre caractéristique du procédé de commande, si aucune demande d'accélération maximale par procédure de « kick down » n'est détectée, la consigne de régime est la valeur nominale, calculée en fonction de l'environnement et des actions du conducteur, pour le mode de commande de la transmission automatique initié sans la détection d'une telle procédure de « kick down ».

Selon une autre caractéristique du procédé de commande, l'étape de détection de la demande de « kick down » est réalisée par traitement de l'information sur l'enfoncement de la pédale d'accélérateur, délivrée par exemple par le système de contrôle moteur.

Selon une autre caractéristique du procédé de commande, l'état du moteur est défini par l'encrassement du filtre à particules quand un tel filtre est associé au moteur et par les modes dégradés de son fonctionnement.

Selon une autre caractéristique du procédé de commande, les conditions d'environnement du véhicule sont définies notamment par l'altitude.

Selon une autre caractéristique du procédé de commande, l'étape de détermination du régime moteur auquel la puissance maximale peut être atteinte, en fonction de son état et de l'environnement du véhicule, utilise l'information sur la pression atmosphérique pour connaître l'altitude, la pression à l'échappement pour évaluer l'encrassement du filtre à particules équipant le moteur et les sorties des modes dégradés du moteur.

D'autres caractéristiques et avantages de l'invention apparaîtront à la lecture de la description du procédé de commande, illustrée par les figures suivantes, qui sont :
- la figure 1 : les variations de la puissance du moteur en fonction du régime,
- la figure 2 : les différentes étapes du procédé de commande selon l'invention,
- la figure 3 : l'organigramme du procédé selon l'invention.

Le procédé de commande d'une transmission automatique continûment variable délivre des consignes de régime primaire, qui est égal au régime moteur lorsque l'embrayage du convertisseur de couple hydraulique est fermé et quand le sélecteur de rapports de vitesses est sur « Drive », c'est-à-dire en marche avant. En effet, le ratio d'une transmission étant le rapport entre le régime primaire et le régime secondaire qui est fixé par la vitesse du véhicule, il est équivalent de raisonner en régime primaire ou en ratio. Le procédé de commande est donc destiné à délivrer une consigne de régime moteur tandis que le moteur contrôle son couple.

Ces consignes de régime primaire sont établies pour différents modes dont l'activation dépend de l'environnement et des actions du conducteur, comme par exemple un mode sportif, un mode économique, un mode de conduite en descente, un mode manuel ... et le mode de rétrogradation forcée dit « kick down ». Ces consignes de régime primaire sont calculées en fonction des demandes du conducteur traduites par des actions sur les pédales d'accélérateur et de frein, la commande séquentielle du mode manuel entre autres et en fonction des variables d'environnement telles que la vitesse du véhicule, la détection de pente de la route sur laquelle circule le véhicule, la température de la boîte de vitesses par exemple.

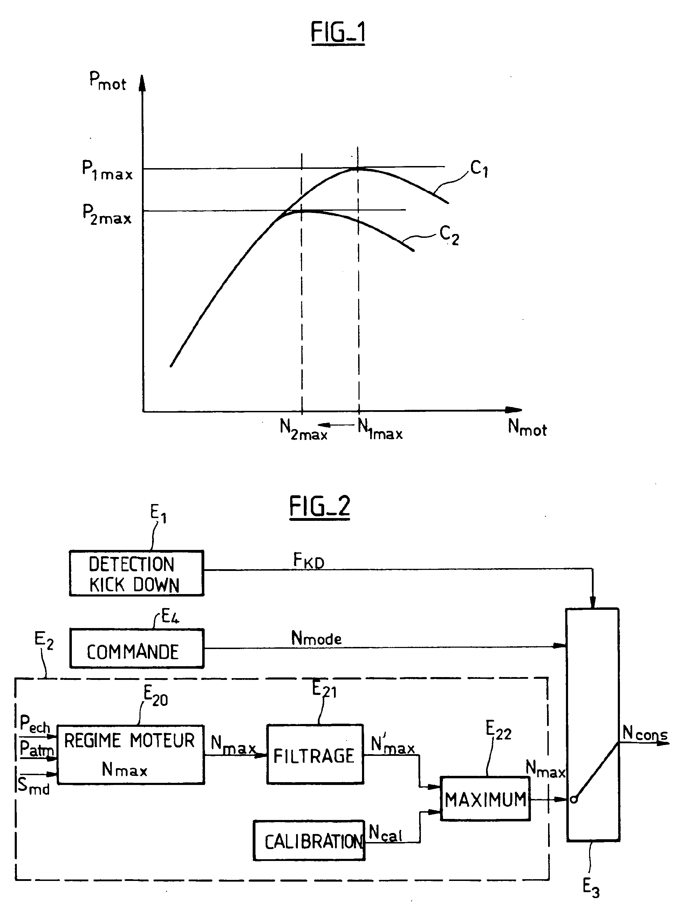

Comme le montre la figure 1, dans des conditions normales de fonctionnement du véhicule à l'altitude zéro et à une température extérieure de 20°C, avec un moteur dont le filtre à particules n'est pas encrassé et qui ne fonctionne pas en mode dégradé, la courbe C₁ de variation de la puissance Pₘₒₜ du moteur en fonction de son régime Nₘₒₜ montre que la puissance croît jusqu'à une valeur maximale P₁ₘₐₓᵢ correspondant à un régime moteur N₁ₘₐₓ, avant de décroître pour des valeurs du régime supérieures. Dans le cas de conditions différentes dégradant la puissance du moteur, la courbe C₂ de variation de cette puissance présente un maximum P₂ₘₐₓ inférieur au maximum P₁ₘₐₓ de la courbe C₁ et correspondant à un régime N₂ₘₐₓ également inférieur au régime N₁ₘₐₓ correspondant au maximum de puissance P₁ₘₐₓ de la courbe C₁.

En cas de demande d'accélération maximale par procédure de « kick down », le régime moteur doit varier de la valeur N₁ₘₐₓ à la valeur N₂ₘₐₓ en raison de la déchéance des performances, car si le régime N₁ₘₐₓ était conservé, le conducteur perdrait en puissance au moment de sa demande d'accélération maximale qu'il n'obtiendrait pas.

Le procédé de commande selon l'invention adapte le régime moteur en cas de procédure de « kick down » pour que le moteur délivre sa puissance maximale réelle dans les conditions instantanées de fonctionnement du véhicule. Pour cela, comme le montre la figure 2, il réalise une première étape de détection E₁) de la demande d'accélération maximale dite « kick down » par traitement de l'information I_{P} sur l'enfoncement de la pédale d'accélérateur, délivrée par exemple par le système de contrôle moteur.

Dans le cas où une telle procédure de rétrogradation forcée est détectée, le procédé réalise une étape E₂) de détermination du régime moteur N_{MAX} auquel la puissance maximale peut être atteinte, en fonction de l'état du moteur et de l'environnement du véhicule. A cet effet, il utilise l'information sur la pression atmosphérique Pₐₜₘ pour connaître l'altitude, la pression à l'échappement P_{éch} pour évaluer l'encrassement du filtre à particules et les sorties S_{md} des modes dégradés du moteur pour calculer une première valeur de régime moteur Nₘₐₓ. De plus, pour que le régime primaire de puissance maximale ne soit pas sujet à des oscillations, cette information Nₘₐₓ, établie à l'étape E₂₀) est filtrée dans une étape E₂₁) pour donner une nouvelle valeur N'ₘₐₓ. Enfin, il est possible de garantir un régime moteur minimum au conducteur quelque soit la déchéance de couple. Pour ce faire, une étape E₂₂) établit le maximum entre N'ₘₐₓ qui est la sortie du filtre précédemment évoqué et N_{cal} qui est une valeur de régime moteur fixé par calibration dans une table dépendant de la vitesse véhicule.

En cas de détection d'une procédure d'accélération maximale demandée par le conducteur par « Kick down », la consigne de régime primaire finale N_{cons} est la valeur du régime moteur N_{MAX} précédemment déterminée correspondant au régime permettant d'atteindre la puissance maximale dans les conditions actuelles.

Par contre, si aucune procédure de « kick down » n'est détectée, la consigne de ratio est la valeur nominale N_{mode}, calculée à l'étape E₄), en fonction de l'environnement et des actions du conducteur, pour le mode de commande de la transmission automatique initié sans la détection d'une procédure de « kick down ».

Cette consigne de régime N_{cons} est établie à l'étape E₃) en fonction du signal F_{KD} de détection d'une demande d'accélération forcée de type « kick down ».

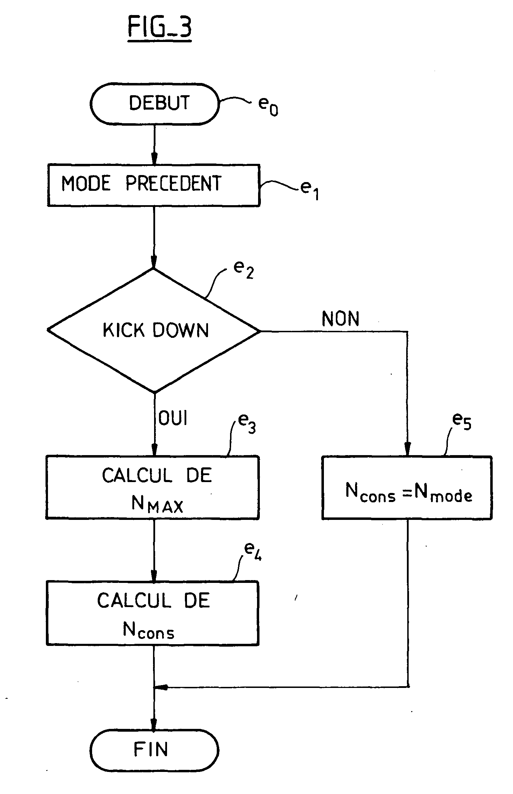

La figure 3 est un organigramme du procédé de commande d'une transmission automatique continûment variable. Après l'étape e₀) d'initialisation, la commande de la transmission s'effectue selon un mode déterminé par le conducteur, sportif ou économique par exemple, qui fait l'objet de l'étape e₁) et appelé mode précédent. Si au cours d'une étape e₂), une procédure d'accélération maximale par « kick down » est détectée, le procédé comporte alors une étape e₃) de détermination du régime moteur N_{MAX} pour obtenir la puissance maximale réellement fournie par le moteur, qui est suivie d'une étape e₄) de calcul de la consigne finale N_{cons} de régime primaire à partir du régime N_{MAX} calculé à l'étape e₃).

Si par contre, il n'y a pas eu de détection d'une procédure de « kick down » à l'étape e₂), la consigne de régime primaire N_{cons} délivrée par la commande à l'étape e₅) est celle N_{mode} déterminée et appliquée selon le mode choisi à l'étape e₁).

Ainsi, grâce à l'invention, lorsqu'un conducteur va engager une procédure de rétrogradation forcée, dite « kick down », il est assuré d'obtenir la puissance maximale que le moteur peut fournir étant donné son état et l'environnement du véhicule, au moment de cette procédure puisque les conditions d'une déchéance de puissance ont été prises en compte.

## Revendications

1. Procédé de commande d'une transmission automatique continûment variable pour véhicule automobile, équipé d'un dispositif de rétrogradation forcé dit « kick down », mis en oeuvre par enfoncement total de la pédale d'accélérateur par le conducteur pour obtenir l'accélération maximale du véhicule, et d'un système de contrôle électronique du moteur, **caractérisé en ce qu'**il détermine le régime du moteur auquel la puissance maximale du moteur peut être atteinte, en fonction de l'état de fonctionnement du moteur et des composants qui lui sont liés, un filtre à particules notamment, et des conditions environnementales extérieures du véhicule, l'altitude notamment lors des procédures de rétrogradation forcé.

2. Procédé de commande selon la revendication 1, **caractérisé en ce qu'**il comporte les étapes suivantes :
- E₁) la détection d'une demande d'accélération maximale par procédure de « kick down » déclenchée par une action volontaire du conducteur,
- E₂) la détermination du régime (N_{MAX}) du moteur auquel la puissance maximale (Pₘₐₓ) peut être atteinte en fonction de l'état de fonctionnement du moteur et de l'environnement du véhicule,
- E₃) le calcul de la consigne (N_{cons}) du régime primaire de la transmission automatique à appliquer à ladite transmission pour obtenir la puissance maximale du moteur, dans le cas d'une détection de demande d'accélération maximale.

3. Procédé de commande selon la revendication 2, **caractérisé en ce que**, si aucune demande d'accélération maximale par procédure de « kick down » n'est détectée, la consigne de régime est la valeur nominale (N_{mode}), calculée en fonction de l'environnement et des actions du conducteur, pour le mode de commande de la transmission automatique initié sans la détection d'une telle procédure de « kick down ».

4. Procédé de commande selon la revendication 2, **caractérisé en ce que** l'étape de détection E₁) de la demande de « kick down » est réalisée par traitement de l'information (I_{P}) sur l'enfoncement de la pédale d'accélérateur, délivrée par exemple par le système de contrôle moteur.

5. Procédé de commande selon la revendication 2, **caractérisé en ce que** l'état du moteur est défini par l'encrassement du filtre à particules quand un tel filtre est associé au moteur et par les modes dégradés de son fonctionnement.

6. Procédé de commande selon la revendication 2, **caractérisé en ce que** les conditions d'environnement du véhicule sont définies notamment par l'altitude.

7. Procédé de commande selon les revendications 5 et 6, **caractérisé en ce que** l'étape E₂) de détermination du régime moteur (N_{MAX}) correspondant à la puissance maximale (Pₘₐₓ) fournie réellement par le moteur, en fonction de son état et de l'environnement du véhicule, utilise l'information sur la pression atmosphérique (Pₐₜₘ) pour connaître l'altitude, la pression à l'échappement (P_{éch}) pour évaluer l'encrassement du filtre à particules équipant le moteur et les sorties (S_{md}) des modes dégradés du moteur.

8. Procédé de commande selon la revendication 7, **caractérisé en ce que** l'étape E₂) de détermination du régime (N_{MAX}) du moteur auquel la puissance maximale (Pₘₐₓ) peut être atteinte comprend une étape E₂₁) de filtrage d'une première valeur (Nₘₐₓ) établie à l'étape E₂₀) en fonction de son état et de l'environnement du véhicule, suivie d'une étape E₂₂) de garantie d'un régime moteur minimal au conducteur quelque soit la déchéance du couple.

9. Procédé de commande selon la revendication 8, **caractérisé en ce que** l'étape de garantie consiste à prendre le maximum entre la valeur (Nₘₐₓ) filtrée et la valeur (N_{cal}) de régime moteur fixé par calibration dans une table dépendant de la vitesse véhicule.

## Claims

1. Method of controlling a continuously variable automatic transmission for a motor vehicle, equipped with a forced downshift device, otherwise known as a "kick down" device, operated by the driver completely depressing the accelerator pedal in order to obtain the maximum acceleration of the vehicle, and with an electronic engine management system, **characterized in that** it determines the engine speed at which maximum engine power can be achieved, as a function of the operating state of the engine and of the components associated therewith, particularly a particulate filter, and of the environmental conditions outside the vehicle, particularly the altitude, during forced downshift procedures.

2. Control method according to Claim 1, **characterized in that** it comprises the following steps:
- E₁) detecting a demand for maximum acceleration through a "kick down" procedure initiated through a deliberate action on the part of the driver,
- E₂) determining the engine speed (N_{MAX}) at which maximum power (Pₘₐₓ) can be achieved as a function of the operating state of the engine and of the vehicle environment,
- E₃) calculating the automatic transmission primary speed setpoint (Nₛₑₜₚₜ) to be applied to said transmission in order to obtain maximum engine power, if a demand for maximum acceleration has been detected.

3. Control method according to Claim 2, **characterized in that,** if no demand for maximum acceleration through a "kick down" procedure has been detected, the speed setpoint is the nominal value (N_{mode}) calculated as a function of the environment and of the actions of the driver, for the automatic transmission control mode initiated without the detection of such a "kick down" procedure.

4. Control method according to Claim 2, **characterized in that** the step E₁) of detecting the demand for "kick down" is performed by processing the information (I_{P}) on the extent to which the accelerator pedal has been depressed, this information being delivered, for example, by the engine management system.

5. Control method according to Claim 2, **characterized in that** the state of the engine is defined by the degree of soiling of the particulate filter when such a filter is associated with the engine and by the degraded modes of operation thereof.

6. Control method according to Claim 2, **characterized in that** the environmental conditions for the vehicle are defined notably by the altitude.

7. Control method according to Claims 5 and 6, **characterized in that** step E₂) of determining the engine speed (N_{MAX}) corresponding to the maximum power (Pₘₐₓ) actually provided by the engine, as a function of its state and of the vehicle environment, uses information about atmospheric pressure (Pₐₜₘ) to determine the altitude, the exhaust pressure (Pₑₓₕ) to evaluate the degree of soiling of the particulate filter with which the engine is equipped, and the outputs (OP_{dm}) of the degraded modes of the engine.

8. Control method according to Claim 7, **characterized in that** step E₂) of determining the engine speed (N_{MAX}) at which maximum power (Pₘₐₓ) can be achieved comprises a step E₂₁) of filtering a first value (Nₘₐₓ) established in step E₂₀) as a function of its state and of the vehicle environment, followed by a step E₂₂) of guaranteeing the driver a minimal engine speed whatever the shortfall in torque.

9. Control method according to Claim 8, **characterized in that** the guarantee step consists in adopting the maximum between the filtered value (Nₘₐₓ) and the engine speed value (N_{cal}) set by calibration in a table dependent on vehicle speed.

## Patentansprüche

1. Verfahren zur Steuerung eines stufenlos variablen Automatikgetriebes für ein Kraftfahrzeug, das mit einer "Kick-Down" genannten Vorrichtung zur Zwangsrückschaltung, die durch vollständiges Herunterdrücken des Gaspedals durch den Fahrer zum Erhalt der maximalen Beschleunigung des Fahrzeugs eingesetzt wird, und mit einem elektronischen Kontrollsystem des Motors ausgestattet ist, **dadurch gekennzeichnet, dass** es die Drehzahl des Motors, bei der die maximale Leistung des Motors erreicht werden kann, in Abhängigkeit vom Betriebszustand des Motors und der mit ihm verbundenen Bauteile, insbesondere eines Partikelfilters, und von den Außenumgebungsbedingungen des Fahrzeugs, insbesondere der Höhe, bei den Prozeduren der Zwangsrückschaltung bestimmt.

2. Steuerverfahren nach Anspruch 1, **dadurch gekennzeichnet, dass** es die folgenden Schritte aufweist:
- E₁) die Erfassung einer Anforderung maximaler Beschleunigung durch eine "Kick-Down"-Prozedur, die durch eine absichtliche Einwirkung des Fahrers ausgelöst wird,
- E₂) die Bestimmung der Drehzahl (N_{MAX}) des Motors, bei der die maximale Leistung (Pₘₐₓ) erreicht werden kann, in Abhängigkeit vom Betriebszustand des Motors und der Umgebung des Fahrzeugs,
- E₃) die Berechnung des Sollwerts (N_{cons}) der Primärdrehzahl des Automatikgetriebes, die an das Getriebe angewendet werden muss, um die maximale Leistung des Motors zu erhalten, im Fall einer Erfassung einer Anforderung maximaler Beschleunigung.

3. Steuerverfahren nach Anspruch 2, **dadurch gekennzeichnet, dass**, wenn keine Anforderung maximaler Beschleunigung durch eine "Kick-Down"-Prozedur erfasst wird, der Drehzahlsollwert der Nennwert (N_{mode}), berechnet in Abhängigkeit von der Umgebung und der Aktionen des Fahrers, für den Steuermodus des Automatikgetriebes ist, der ohne die Erfassung einer solchen "Kick-Down"-Prozedur eingeleitet wird.

4. Steuerverfahren nach Anspruch 2, **dadurch gekennzeichnet, dass** der Schritt der Erfassung E₁) der "Kick-Down"-Anforderung durch Verarbeitung der Information (Iₚ) über das Herunterdrücken des Gaspedals durchgeführt wird, die zum Beispiel vom Motorkontrollsystem geliefert wird.

5. Steuerverfahren nach Anspruch 2, **dadurch gekennzeichnet, dass** der Zustand des Motors durch die Verschmutzung des Partikelfilters, wenn ein solcher Filter dem Motor zugeordnet ist, und durch die Notläufe seines Betriebs definiert wird.

6. Steuerverfahren nach Anspruch 2, **dadurch gekennzeichnet, dass** die Umgebungsbedingungen des Fahrzeugs insbesondere durch die Höhe definiert werden.

7. Steuerverfahren nach den Ansprüchen 5 und 6, **dadurch gekennzeichnet, dass** der Schritt E₂) der Bestimmung der Motordrehzahl (N_{MAX}) entsprechend der tatsächlich vom Motor gelieferten maximalen Leistung (Pₘₐₓ) in Abhängigkeit von seinem Zustand und von der Umgebung des Fahrzeugs die Information über den Luftdruck (Pₐₜₘ) zur Feststellung der Höhe, den Druck am Auspuff (P_{éch}) zur Ermittlung der Verschmutzung des den Motor bestückenden Partikelfilters, und die Ausgangssignale (S_{md}) der Notläufe des Motors verwendet.

8. Steuerverfahren nach Anspruch 7, **dadurch gekennzeichnet, dass** der Schritt E₂) der Bestimmung der Motordrehzahl (N_{MAX}), bei der die maximale Leistung (Pₘₐₓ) erreicht werden kann, einen Schritt E₂₁) der Filterung eines ersten Werts (Nₘₐₓ), der im Schritt E₂₀) in Abhängigkeit von seinem Zustand und von der Umgebung des Fahrzeugs erstellt wird, gefolgt von einem Schritt E₂₂) der Garantie einer Mindestmotordrehzahl für den Fahrer unabhängig vom Drehmomentabfall enthält.

9. Steuerverfahren nach Anspruch 8, **dadurch gekennzeichnet, dass** der Garantieschritt darin besteht, das Maximum aus dem gefilterten Wert (Nₘₐₓ) und dem Motordrehmomentwert (N_{cal}) zu wählen, das durch Kalibrierung in einer von der Fahrzeuggeschwindigkeit abhängenden Tabelle festgelegt wird.
